# EUROPEAN PATENT APPLICATION

(11) **EP 3 783 697 A1**
(43) Date of publication of application: **24.02.2021**
(21) Application number: 19776600.9
(22) Date of filing: 19.03.2019
(51) Int. Cl.: H01M 4/04, C09D 5/00, C09D 5/24, C09D 7/20, C09D 7/61, C09D 7/65, C09D 201/00, H01B 1/24, H01G 11/28, H01M 4/02, H01M 4/13, H01M 4/66

(54) **COMPOSITION FOR FORMING UNDERCOAT LAYER OF ENERGY STORAGE DEVICE**

(30) Priority: 29.03.2018 JP 2018063676
(71) Applicant: Nissan Chemical Corporation, Tokyo 103-6119 (JP)
(72) Inventor: HATANAKA, Tatsuya, Funabashi-shi, Chiba 274-0052 (JP); SAKAIDA,Yasushi, Funabashi-shi, Chiba 274-0052 (JP); MATSUBARA, Koutatsu, Funabashi-shi, Chiba 274-8507 (JP)
(74) Representative: Mewburn Ellis LLP
(86) International application number: PCT/JP2019/011328
(87) International publication number: WO 2019/188539

(57) **Abstract**

Provided is a composition for forming an undercoat layer of an energy storage device, the composition comprising carbon nanotubes, a carbon nanotube dispersant, and a solvent, and the G/D band ratio of the carbon nanotubes being 0.680 to 2.900. This composition makes it possible to provide an undercoat layer that exhibits the effects of reducing resistance and suppressing an increase in resistance.

## Description

### TECHNICAL FIELD

The present invention relates to an undercoat layer-forming composition for an energy storage device.

### BACKGROUND ART

Given the need for smaller sizes, lower weights and higher functionality in portable electronic devices such as smart phones, digital cameras and handheld game consoles, the development of high-performance batteries has been actively pursued in recent years and demand for secondary batteries, which can be repeatedly used by charging, is growing rapidly.

In particular, lithium ion secondary batteries, because of their high energy density and high voltage, and also because they lack a memory effect during charging and discharging, are the secondary batteries being developed most aggressively today.

As part of recent efforts to tackle environmental problems, the development of electrical vehicles is also being actively pursued. A higher performance has come to be desired of the secondary batteries that serve as the power source for such vehicles.

Lithium ion secondary batteries have a structure in which a container houses a positive electrode and a negative electrode capable of intercalating and deintercalating lithium and a separator interposed between the electrodes, and is filled with an electrolyte solution (in the case of lithium ion polymer secondary batteries, a gel-like or completely solid electrolyte is used instead of a liquid electrolyte solution).

The positive electrode and negative electrode are generally produced by coating a composition which includes an active material capable of intercalating and deintercalating lithium, an electrically conductive material consisting primarily of a carbon material, and a polymer binder onto a current collector such as copper foil or aluminum foil. The binder is used to bond the active material with the conductive material, and also to bond these with the metal foil. Commercially available binders of this type include, for example, N-methylpyrrolidone (NMP)-soluble fluoropolymers such as polyvinylidene fluoride (PVdF), and aqueous dispersions of olefin polymers.

However, the bonding strength of the above binders to the current collector is inadequate. During production operations such as the electrode cutting and winding steps, some of the active material and conductive material separates from the current collector and falls off, causing micro-shorting and variability in the battery capacity.

In addition, with long-term use, due to swelling of the binder by the electrolyte solution or to changes in the volume of the electrode mixture associated with volume changes resulting from lithium intercalation and deintercalation by the active material, the contact resistance between the electrode mixture layer and the current collector increases or some of the active material and the conductive material separates from the current collector and falls off, leading to degradation of the battery capacity and also to problems in terms of safety.

In an attempt to solve such problems, methods that involve placing an electrically conductive undercoat layer between the current collector and the electrode mixture layer have been developed as a way to increase adhesion between the current collector and the electrode mixture layer and lower the contact resistance, thereby lowering the resistance of the battery.

For example, Patent Document 1 discloses the art of disposing, as an undercoat layer between the current collector and the electrode mixture layer, a conductive layer containing carbon as an electrically conductive filler. This publication indicates that, by using a composite current collector which includes an undercoat layer, the contact resistance between the current collector and the electrode mixture layer can be reduced, loss of capacity during high-speed discharge can be suppressed, and moreover deterioration of the battery can be minimized. Similar art is disclosed also in Patent Documents 2 and 3.

In addition, Patent Documents 4 and 5 disclose an undercoat layer which contains carbon nanotubes (abbreviated below as "CNTs") as the conductive filler.

The undercoat is expected not only to lower the resistance of the battery, but also to have the function of suppressing a rise in resistance. However, depending on the conductive carbon material used, there are cases in which it increases the resistance of the battery and accelerates the rise in resistance.

In this regard, there is no clear knowledge as to what type of conductive carbon material, when used, can lower the resistance of a battery and can also suppress a rise in resistance.

### PRIOR ART DOCUMENTS

### PATENT DOCUMENTS

Patent Document 1: JP-A H09-097625
Patent Document 2: JP-A 2000-011991
Patent Document 3: JP-A H11-149916
Patent Document 4: WO 2014/042080
Patent Document 5: WO 2015/029949

### SUMMARY OF INVENTION

### TECHNICAL PROBLEM

The present invention was arrived at in light of the above circumstances. An object of the invention is to provide an undercoat layer-forming composition for an energy storage device, which composition is able to give an undercoat layer that exhibits a resistance-lowering effect and a resistance rise-suppressing effect.

### SOLUTION TO PROBLEM

An undercoat layer is a layer which, by being interposed at the interface between an electrode and a current-collecting foil, helps to lower the resistance. Accordingly, the inventors thought that a conductive carbon having a high crystallinity and few defects would be suitable as the undercoat layer material and thus conducted extensive investigations. As a result, they have discovered that a composition capable of giving an undercoat layer that exhibits a resistance-lowering effect and a resistance rise-suppressing effect can be obtained by using carbon nanotubes whose crystallinity and amount of defects, as determined from the G/D band ratio in Raman spectroscopy, have been set within specific ranges.

Accordingly, the invention provides:
1. An undercoat layer-forming composition for an energy storage device, which composition includes carbon nanotubes, a carbon nanotube dispersion and a solvent, wherein the carbon nanotubes have a G/D band ratio of from 0.680 to 2.900;
2. The energy storage device undercoat layer-forming composition of 1 above, wherein the G/D band ratio is from 0.800 to 2.900;
3. The energy storage device undercoat layer-forming composition of 2 above, wherein the G/D band ratio is from 0.900 to 2.900;
4. The energy storage device undercoat layer-forming composition of any of 1 to 3 above which has a solids content of 20 wt% or less;
5. The energy storage device undercoat layer-forming composition of 4 above, wherein the solids content is 15 wt% or less;
6. The energy storage device undercoat layer-forming composition of 5 above, wherein the solids content is 10 wt% or less;
7. The energy storage device undercoat layer-forming composition of any of 1 to 6 above, wherein the solvent includes water;
8. The energy storage device undercoat layer-forming composition of any of 1 to 7 above, wherein the solvent includes an alcohol;
9. The energy storage device undercoat layer-forming composition of any of 1 to 8 above, wherein the solvent is a mixed solvent of water and an alcohol;
10. The energy storage device undercoat layer-forming composition of any of 1 to 9 above, wherein the carbon nanotube dispersant includes a vinyl polymer having pendant oxazoline groups or a triarylamine-based highly branched polymer;
11. An undercoat layer obtained from the energy storage device undercoat layer-forming composition of any of 1 to 10 above;
12. The undercoat layer of 11 above which has a coating weight of 1,000 mg/m² or less;
13. The undercoat layer of 12 above, wherein the coating weight is 500 mg/m² or less;
14. The undercoat layer of 13 above, wherein the coating weight is 300 mg/m² or less;
15. The undercoat layer of 14 above, wherein the coating weight is 200 mg/m² or less;
16. A composite current collector for an energy storage device electrode, which composite current collector includes the undercoat layer of any of 11 to 15 above;
17. An energy storage device electrode which includes the composite current collector of 16 above;
18. An energy storage device which includes the energy storage device electrode of 17 above;
19. The energy storage device of 18 above which is a lithium-ion secondary battery;
20. A conductive carbon material dispersion which includes carbon nanotubes, a carbon nanotube dispersant and a solvent, wherein the carbon nanotubes have a G/D band ratio of from 0.680 to 2.900; and
21. A conductive coat obtained from the conductive carbon material dispersion of 20 above.

### ADVANTAGEOUS EFFECTS OF INVENTION

Because the energy storage device undercoat layer-forming composition of the present invention uses carbon nanotubes having a G/D band ratio within a specific range as the conductive carbon material, a lower resistance can be achieved in energy storage devices having an undercoat layer obtained from this composition, in addition to which rises in the resistance can be suppressed.

### BRIEF DESCRIPTION OF DRAWINGS

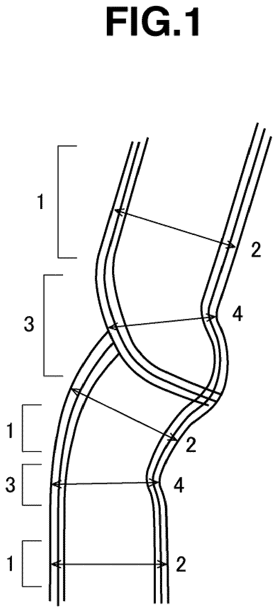

[FIG. 1] FIG. 1 is a schematic cross-sectional diagram of a carbon nanotube having constricted areas, such as may be used in this invention.

### DESCRIPTION OF EMBODIMENTS

The present invention is described more fully below.

The energy storage device undercoat layer-forming composition according to the invention (referred to below simply as "the composition") includes carbon nanotubes, a carbon nanotube dispersion and a solvent, and is characterized in that the carbon nanotubes have a G/D band ratio of from 0.680 to 2.900.

The G/D band ratio in this invention, as mentioned above, is a parameter which serves as an indicator of the crystallinity and amount of defects in the carbon nanotubes used, and can be determined by Raman spectrometry.

The G/D band ratio is, more specifically, represented as the ratio (G⁺+G⁻)/D after determining by Raman spectrometry the respective peak intensities of the G⁺ band, which is the Raman shift having the largest intensity between 1590 and 1605 cm⁻¹, the G⁻ band, which is the Raman shift having the largest intensity between 1580 and 1565 cm⁻¹, and the D band, which is the Raman shift having the largest intensity between 1330 and 1310 cm⁻¹. The baseline when calculating the peak intensities is set to from 1700 to 1150 cm⁻¹.

In this invention, the G/D band ratio is from 0.680 to 2.900. However, to increase the resistance-lowering effect and resistance rise-suppressing effect of the device obtained, the G/D band ratio is preferably 0.690 or more, more preferably 0.710 or more, even more preferably 0.800 or more, and still more preferably 0.900 or more. The upper limit in the G/D band ratio is not more than 2.900, preferably not more than 2.500, more preferably not more than 2,000, and still more preferably not more than 1.500.

Carbon nanotubes are generally produced by an arc discharge process, chemical vapor deposition (CVD), laser ablation or the like. The CNTs used in this invention may be obtained by any of these methods. CNTs are categorized as single-walled CNTs consisting of a single cylindrically rolled graphene sheet (abbreviated below as "SWCNTs"), double-walled CNTs consisting of two concentrically rolled graphene sheets (DWCNTs), and multi-walled CNTs consisting of a plurality of concentrically rolled graphene sheets (MWCNTs). SWCNTs, DWCNTs or MWCNTs may be used alone in the invention, or a plurality of these types of CNTs may be used in combination. From the standpoint of cost, multi-walled CNTs having a diameter of at least 2 nm in particular are preferred; from the standpoint of the ability to form a thinner film, multi-walled CNTs having a diameter of 500 nm or less are preferred, multi-walled CNTs having a diameter of 100 nm or less are more preferred, multi-walled CNT's have a diameter of 50 nm or less are even more preferred, and multi-walled CNT's having a diameter of 30 nm or less are most preferred. The diameter of the CNTs can be measured by using a transmission electron microscope to examine a thin film obtained by drying a dispersion of the CNTs in a solvent.

When SWCNTs, DWCNTs or MWCNTs are produced by the above methods, catalyst metals such as nickel, iron, cobalt or yttrium may remain in the product, and so purification to remove these impurities is sometimes necessary. Sonication together with acid treatment with nitric acid, sulfuric acid or the like is effective for removing impurities. However, in acid treatment with nitric acid, sulfuric acid or the like, there is a possibility of the π-conjugated system making up the CNTs being destroyed and the properties inherent to the CNTs being lost. Hence, it is desirable for the CNTs to be purified and used under suitable conditions.

In order to exhibit a battery resistance-lowering effect when the dispersion is applied as a film and formed into an undercoat layer, it is preferable for the CNTs used in this invention to be ones that easily disperse within the dispersion. Such CNTs preferably have numerous crystal discontinuities that readily break under a small energy.

From this standpoint, the CNTs used in the inventive composition are preferably ones having constricted areas. As used herein, a "CNT having constricted areas" refers to a carbon nanotube having constricted areas where the diameter of the tube is 90% or less of the tube diameter across parallel areas of the CNT.

Because such a constricted area is a site created when the CNT direction of growth changes, it has a crystalline discontinuity and is a breakable place that can be easily cut with a small mechanical energy.

FIG. 1 shows a schematic cross-sectional diagram of a CNT having parallel areas 1 and constricted areas 3.

A parallel area 1, as shown in FIG. 1, is a portion where the walls can be recognized as two parallel straight lines or two parallel curved lines. At this parallel area 1, the distance between the outer walls of the tube in the direction normal to the parallel lines is the tube outer diameter 2 for the parallel area 1.

A constricted area 3 is an area which is continuous at both ends with parallel areas 1 and where the distance between the walls is closer than in the parallel areas 1. More specifically, it is an area having a tube outer diameter 4 which is 90% or less of the tube outer diameter 2 at the parallel areas 1. The tube outer diameter 4 at the constricted areas 3 is the distance between the outer walls of the tube at the place where the outer walls are closest together. As shown in FIG. 1, places where the crystal is discontinuous exist at most of the constricted areas 3.

The wall shape and tube outer diameter of the CNTs can be examined with a transmission electron microscope or the like. Specifically, the constricted areas can be confirmed from the image obtained by preparing a 0.5% dispersion of the CNTs, placing the dispersion on the microscope stage and drying it, and then photographing the dried dispersion at a magnification of 50,000× with the transmission electron microscope.

When a 0.1% dispersion of the CNTs is prepared, the dispersion is placed on the microscope stage and dried, an image of the dried dispersion photographed at 20,000× with the transmission electron microscope is divided into 100 nm square sections and 300 of the sections in which the CNTs occupy from 10 to 80% of the 100 nm square section are selected, the proportion of all such sections having breakable places (proportion with breakable places present) is determined as the proportion of the 300 sections having at least one constricted area present within the section. When the surface area occupied by the CNTs in a section is 10% or less, measurement is difficult because the amount of CNTs present is too low. On the other hand, when the surface area occupied by the CNTs in a section is 80% or more, the CNTs are numerous and end up overlapping, as a result of which it is difficult to distinguish between parallel areas and constricted areas, making precise measurement a challenge.

In the CNTs used in this invention, the proportion with breakable places present is 60% or more. When the proportion with breakable places present is lower than 60%, the CNTs are difficult to disperse; applying excessive mechanical energy to effect dispersion leads to destruction of the crystalline structure of the graphite-net plane, lowering the properties such as electrical conductivity that are characteristic of CNTs. To obtain a higher dispersibility, the proportion having breakable places present is preferably 70% or more.

Specific examples of CNTs that may be used in this invention include the following CNTs having a constricted structure that are disclosed in WO 2016/076393 and JP-A 2017-206413: the TC series such as TC-2010, TC-2020, TC-3210L and TC-1210LN (Toda Kogyo Corporation), CNTs synthesized by the super growth method (available from the New Energy and Industrial Technology Development Organization (NEDO) in the National Research and Development Agency), eDIPS-CNTs (available from NEDO in the National Research and Development Agency), the SWNT series (available under this trade name from Meijo Nano Carbon), the VGCF series (available under this trade name from Showa Denko KK), the FloTube series (available under this trade name from CNano Technology), AMC (available under this trade name from Ube Industries, Ltd.), the NANOCYL NC7000 series (available under this trade name from Nanocyl S.A.), Baytubes (available under this trade name from Bayer), GRAPHISTRENGTH (available under this trade name from Arkema), MWNT7 (available under this trade name from Hodogaya Chemical Co., Ltd.) and Hyperion CNT (available under this trade name from Hyperion Catalysis International).

In the inventive composition, although use can be made of conductive carbon materials other than CNTs which satisfy the above G/D band ratio, such as carbon black, ketjen black, acetylene black, carbon whiskers, carbon fibers, natural graphite or synthetic graphite, it is preferable in this invention to use solely CNTs which satisfy the above G/D band ratio as the conductive carbon material.

The dispersant may be suitably selected from among those which have hitherto been used as dispersants for conductive carbon materials such as CNTs, illustrative examples of which include carboxymethylcellulose (CMC), polyvinylpyrrolidone (PVP), acrylic resin emulsions, water-soluble acrylic polymers, styrene emulsions, silicone emulsions, acrylic silicone emulsions, fluoropolymer emulsions, EVA emulsions, vinyl acetate emulsions, vinyl chloride emulsions, urethane resin emulsions, the triarylamine-based highly branched polymers mentioned in WO 2014/04280 and the pendant oxazoline group-containing polymers mentioned in WO 2015/029949. In this invention, the use of dispersants containing the pendant oxazoline group-containing polymers mentioned in WO 2015/029949 or dispersants containing the triarylamine-based highly branched polymers mentioned in WO 2014/04280 is preferred.

The pendant oxazoline group-containing polymers (referred to below as the "oxazoline polymers") are preferably pendant oxazoline group-containing vinyl polymers which can be obtained by the radical polymerization of an oxazoline monomer of formula (1) having a polymerizable carbon-carbon double bond-containing group at the 2 position and which have recurring units that are bonded at the 2 position of the oxazoline ring to the polymer backbone or to spacer groups.

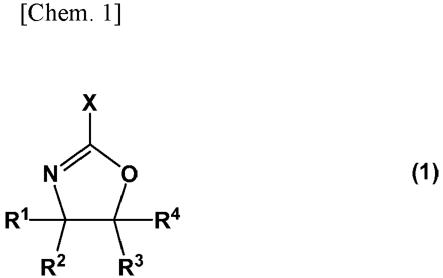

Here, X represents a polymerizable carbon-carbon double bond-containing group, and R¹ to R⁴ are each independently a hydrogen atom, a halogen atom, an alkyl group of 1 to 5 carbon atoms, an aryl group of 6 to 20 carbon atoms, or an aralkyl group of 7 to 20 carbon atoms.

The polymerizable carbon-carbon double bond-containing group on the oxazoline monomer is not particularly limited, so long as it includes a polymerizable carbon-carbon double bond. However, an acyclic hydrocarbon group containing a polymerizable carbon-carbon double bond is preferred. For example, alkenyl groups having from 2 to 8 carbon atoms, such as vinyl, allyl and isopropenyl groups, are preferred.

Here, examples of the halogen atom include fluorine, chlorine, bromine and iodine atoms.

The alkyl groups of 1 to 5 carbon atoms may be ones having a linear, branched or cyclic structure. Illustrative examples include methyl, ethyl, n-propyl, isopropyl, n-butyl, sec-butyl, tert-butyl, n-pentyl and cyclohexyl groups.

Illustrative examples of aryl groups of 6 to 20 carbon atoms include phenyl, xylyl, tolyl, biphenyl and naphthyl groups.

Illustrative examples of aralkyl groups of 7 to 20 carbon atoms include benzyl, phenylethyl and phenylcyclohexyl groups.

Illustrative examples of the oxazoline monomer having a polymerizable carbon-carbon double bond-containing group at the 2 position shown in formula (1) include 2-vinyl-2-oxazoline, 2-vinyl-4-methyl-2-oxazoline, 2-vinyl-4-ethyl-2-oxazoline, 2-vinyl-4-propyl-2-oxazoline, 2-vinyl-4-butyl-2-oxazoline, 2-vinyl-5-methyl-2-oxazoline, 2-vinyl-5-ethyl-2-oxazoline, 2-vinyl-5-propyl-2-oxazoline, 2-vinyl-5-butyl-2-oxazoline, 2-isopropenyl-2-oxazoline, 2-isopropenyl-4-methyl-2-oxazoline, 2-isopropenyl-4-ethyl-2-oxazoline, 2-isopropenyl-4-propyl-2-oxazoline, 2-isopropenyl-4-butyl-2-oxazoline, 2-isopropenyl-5-methyl-2-oxazoline, 2-isopropenyl-5-ethyl-2-oxazoline, 2-isopropenyl-5-propyl-2-oxazoline and 2-isopropenyl-5-butyl-2-oxazoline. In terms of availability and other considerations, 2-isopropenyl-2-oxazoline is preferred.

Also, taking into account the fact that the composition is prepared using an aqueous solvent, it is preferable for the oxazoline polymer also to be water-soluble.

Such a water-soluble oxazoline polymer may be a homopolymer of the oxazoline monomer of formula (1) above. However, to further increase the solubility in water, the polymer is preferably one obtained by the radical polymerization of at least two types of monomer: the above oxazoline monomer and a hydrophilic functional group-containing (meth)acrylic ester monomer.

Illustrative examples of hydrophilic functional group-containing (meth)acrylic monomers include (meth)acrylic acid, 2-hydroxyethyl acrylate, methoxy polyethylene glycol acrylate, monoesters of acrylic acid with polyethylene glycol, 2-aminoethyl acrylate and salts thereof, 2-hydroxyethyl methacrylate, methoxy polyethylene glycol methacrylate, monoesters of methacrylic acid with polyethylene glycol, 2-aminoethyl methacrylate and salts thereof, sodium (meth)acrylate, ammonium (meth)acrylate, (meth)acrylonitrile, (meth)acrylamide, N-methylol (meth)acrylamide, N-(2-hydroxyethyl) (meth)acrylamide and sodium styrene sulfonate. These may be used singly, or two or more may be used in combination. Of these, methoxy polyethylene glycol (meth)acrylate and monoesters of (meth)acrylic acid with polyethylene glycol are preferred.

Concomitant use may be made of monomers other than the oxazoline monomer and the hydrophilic functional group-containing (meth)acrylic monomer, provided that doing so does not adversely affect the ability of the oxazoline polymer to disperse the CNTs.

Illustrative examples of such other monomers include (meth)acrylic ester monomers such as methyl (meth)acrylate, ethyl (meth)acrylate, butyl (meth)acrylate, 2-ethylhexyl (meth)acrylate, stearyl (meth)acrylate, perfluoroethyl (meth)acrylate and phenyl (meth)acrylate; α-olefin monomers such as ethylene, propylene, butene and pentene; haloolefin monomers such as vinyl chloride, vinylidene chloride and vinyl fluoride; styrene monomers such as styrene and α-methylstyrene; vinyl carboxylate monomers such as vinyl acetate and vinyl propionate; and vinyl ether monomers such as methyl vinyl ether and ethyl vinyl ether. These may each be used singly, or two or more may be used in combination.

To further increase the CNT-dispersing ability of the oxazoline polymer employed in the invention, the content of oxazoline monomer in the monomer ingredients used to prepare the oxazoline polymer is preferably at least 10 wt%, more preferably at least 20 wt%, and even more preferably at least 30 wt%. The upper limit in the content of the oxazoline monomer in the monomer ingredients is 100 wt%, in which case a homopolymer of the oxazoline monomer is obtained.

To further increase the water solubility of the resulting oxazoline polymer, the content of the hydrophilic functional group-containing (meth)acrylic monomer in the monomer ingredients is preferably at least 10 wt%, more preferably at least 20 wt%, and even more preferably at least 30 wt%.

As mentioned above, the content of other monomers in the monomer ingredients is in a range that does not affect the ability of the resulting oxazoline polymer to disperse the CNTs. This content differs according to the type of monomer and thus cannot be strictly specified, but may be suitably set in a range of from 5 to 95 wt%, and preferably from 10 to 90 wt%.

The average molecular weight of the oxazoline polymer is not particularly limited, although the weight-average molecular weight is preferably from 1,000 to 2,000,000, and more preferably from 2,000 to 1,000,000. The weight-average molecular weight is a polystyrene-equivalent value obtained by gel permeation chromatography.

The oxazoline polymers that can be used in this invention may be synthesized by a known radical polymerization of the above monomers or may be acquired as commercial products. Illustrative examples of such commercial products include Epocros WS-300 (from Nippon Shokubai Co., Ltd.; solids concentration, 10 wt%; aqueous solution), Epocros WS-700 (Nippon Shokubai Co., Ltd.; solids concentration, 25 wt%; aqueous solution), Epocros WS-500 (Nippon Shokubai Co., Ltd.; solids concentration, 39 wt%; water/1-methoxy-2-propanol solution), Poly(2-ethyl-2-oxazoline) (Aldrich), Poly(2-ethyl-2-oxazoline) (Alfa Aesar) and Poly(2-ethyl-2-oxazoline) (VWR International, LLC).

When the oxazoline polymer is commercially available as a solution, the solution may be used directly as is or may be used after replacing the solvent with a target solvent.

Suitable use can also be made of the highly branched polymers shown in formulas (2) and (3) below that are obtained by the condensation polymerization of a triarylamine with an aldehyde and/or a ketone under acidic conditions.

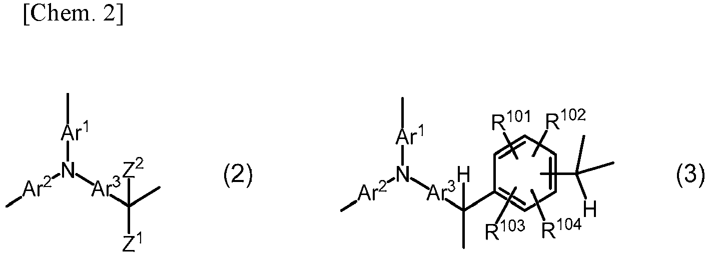

In formulas (2) and (3), Ar¹ to Ar³ are each independently a divalent organic group of any one of formulas (4) to (8), with a substituted or unsubstituted phenylene group of formula (4) being especially preferred.

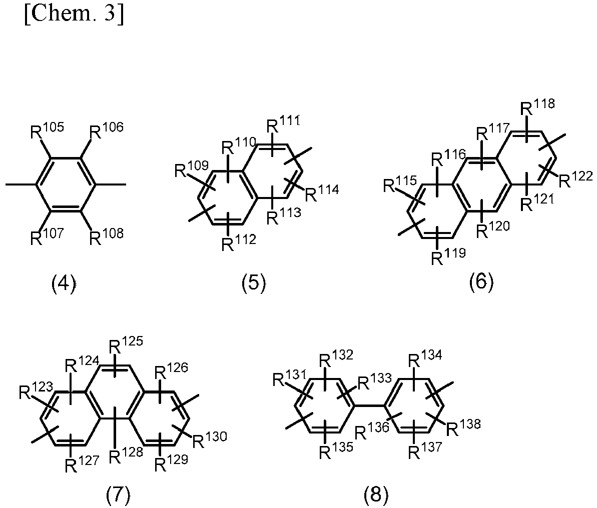

In formulas (2) and (3), Z¹ and Z² are each independently a hydrogen atom, an alkyl group of 1 to 5 carbon atoms which may have a branched structure, or a monovalent organic group of any one of formulas (9) to (12) (provided that Z¹ and Z² are not both alkyl groups), with Z¹ and Z² preferably being each independently a hydrogen atom, a 2- or 3-thienyl group or a group of formula (9). It is especially preferable for one of Z¹ and Z² to be a hydrogen atom and for the other to be a hydrogen atom, a 2- or 3-thienyl group, or a group of formula (9), especially one in which R¹⁴¹ is a phenyl group or one in which R¹⁴¹ is a methoxy group.

In cases where R¹⁴¹ is a phenyl group, when the technique of inserting an acidic group following polymer production is used in the subsequently described acidic group insertion method, the acidic group is sometimes inserted onto this phenyl group.

The alkyl groups of 1 to 5 carbon atoms which may have a branched structure are exemplified in the same way as those mentioned above.

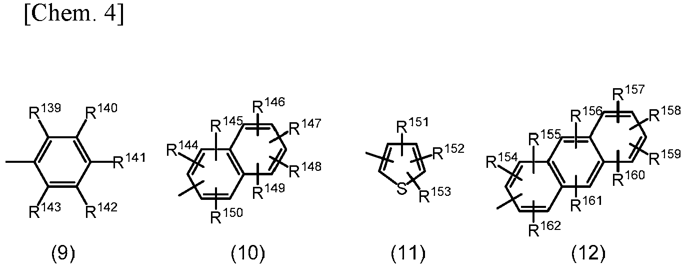

In formulas (3) to (8), R¹⁰¹ to R¹³⁸ are each independently a hydrogen atom, a halogen atom, an alkyl group of 1 to 5 carbon atoms which may have a branched structure, an alkoxy group of 1 to 5 carbon atoms which may have a branched structure, or a carboxyl group, sulfo group, phosphoric acid group, phosphonic acid group or salt thereof.

Here, examples of the halogen atom include fluorine, chlorine, bromine and iodine atoms.

Illustrative examples of alkyl groups of 1 to 5 carbon atoms which may have a branched structure include methyl, ethyl, n-propyl, -isopropyl, n-butyl, sec-butyl, tert-butyl and n-pentyl groups.

Illustrative examples of alkoxy groups of 1 to 5 carbon atoms which may have a branched structure include methoxy, ethoxy, n-propoxy, isopropoxy, n-butoxy, sec-butoxy, tert-butoxy and n-pentoxy groups.

Exemplary salts of carboxyl groups, sulfo groups, phosphoric acid groups and phosphonic acid groups include sodium, potassium and other alkali metal salts; magnesium, calcium and other Group 2 metal salts, ammonium salts; propylamine, dimethylamine, triethylamine, ethylenediamine and other aliphatic amine salts; imidazoline, piperazine, morpholine and other alicyclic amine salts; aniline, diphenylamine and other aromatic amine salts; and pyridinium salts.

In formulas (9) to (12) above, R¹³⁹ to R¹⁶² are each independently a hydrogen atom, a halogen atom, an alkyl group of 1 to 5 carbon atoms which may have a branched structure, a haloalkyl group of 1 to 5 carbon atoms which may have a branched structure, a phenyl group, OR¹⁶³, COR¹⁶³, NR¹⁶³R¹⁶⁴, COOR¹⁶⁵ (wherein R¹⁶³ and R¹⁶⁴ are each independently a hydrogen atom, an alkyl group of 1 to 5 carbon atoms which may have a branched structure, a haloalkyl group of 1 to 5 carbon atoms which may have a branched structure, or a phenyl group; and R¹⁶⁵ is an alkyl group of 1 to 5 carbon atoms which may have a branched structure, a haloalkyl group of 1 to 5 carbon atoms which may have a branched structure, or a phenyl group), or a carboxyl group, sulfo group, phosphoric acid group, phosphonic acid group or salt thereof.

Here, illustrative examples of the haloalkyl group of 1 to 5 carbon atoms which may have a branched structure include difluoromethyl, trifluoromethyl, bromodifluoromethyl, 2-chloroethyl, 2-bromoethyl, 1,1-difluoroethyl, 2,2,2-trifluoroethyl, 1,1,2,2-tetrafluoroethyl, 2-chloro-1,1,2-trifluoroethyl, pentafluoroethyl, 3-bromopropyl, 2,2,3,3-tetrafluoropropyl, 1,1,2,3,3,3-hexafluoropropyl, 1,1,1,3,3,3-hexafluoropropan-2-yl, 3-bromo-2-methylpropyl, 4-bromobutyl and perfluoropentyl groups.

The halogen atoms and the alkyl groups of 1 to 5 carbon atoms which may have a branched structure are exemplified in the same way as the groups represented by above formulas (3) to (8).

In particular, to further increase adherence to the current collector, the highly branched polymer is preferably one having, on at least one aromatic ring in the recurring units of formula (2) or (3), at least one type of acidic group selected from among carboxyl, sulfo, phosphoric acid and phosphonic acid groups and salts thereof, and more preferably one having a sulfo group or a salt thereof.

Illustrative examples of aldehyde compounds that may be used to prepare the highly branched polymer include saturated aliphatic aldehydes such as formaldehyde, p-formaldehyde, acetaldehyde, propylaldehyde, butyraldehyde, isobutyraldehyde, valeraldehyde, capronaldehyde, 2-methylbutyraldehyde, hexylaldehyde, undecylaldehyde, 7-methoxy-3,7-dimethyloctylaldehyde, cyclohexanecarboxyaldehyde, 3-methyl-2-butyraldehyde, glyoxal, malonaldehyde, succinaldehyde, glutaraldehyde and adipinaldehyde; unsaturated aliphatic aldehydes such as acrolein and methacrolein; heterocyclic aldehydes such as furfural, pyridinealdehyde and thiophenaldehyde; aromatic aldehydes such as benzaldehyde, tolylaldehyde, trifluoromethylbenzaldehyde, phenylbenzaldehyde, salicylaldehyde, anisaldehyde, acetoxybenzaldehyde, terephthalaldehyde, acetylbenzaldehyde, formylbenzoic acid, methyl formylbenzoate, aminobenzaldehyde, N,N-dimethylaminobenzaldehyde, N,N-diphenylaminobenzaldehyde, naphthaldehyde, anthraldehyde and phenanthraldehyde; and aralkylaldehydes such as phenylacetaldehyde and 3-phenylpropionaldehyde. Of these, the use of aromatic aldehydes is preferred.

Ketone compounds that may be used to prepare the highly branched polymer are exemplified by alkyl aryl ketones and diaryl ketones. Illustrative examples include acetophenone, propiophenone, diphenyl ketone, phenyl naphthyl ketone, dinaphthyl ketone, phenyl tolyl ketone and ditolyl ketone.

The highly branched polymer that may be used in the invention is obtained, as shown in Scheme 1 below, by the condensation polymerization of a triarylamine compound, such as one of formula (A) below, that is capable of furnishing the aforementioned triarylamine skeleton, with an aldehyde compound and/or a ketone compound, such as one of formula (B) below, in the presence of an acid catalyst.

In cases where a difunctional compound (C) such as a phthalaldehyde (e.g., terephthalaldehyde) is used as the aldehyde compound, not only does the reaction shown in Scheme 1 arise, the reaction shown in Scheme 2 below also arises, giving a highly branched polymer having a crosslinked structure in which the two functional groups both contribute to the condensation reaction.

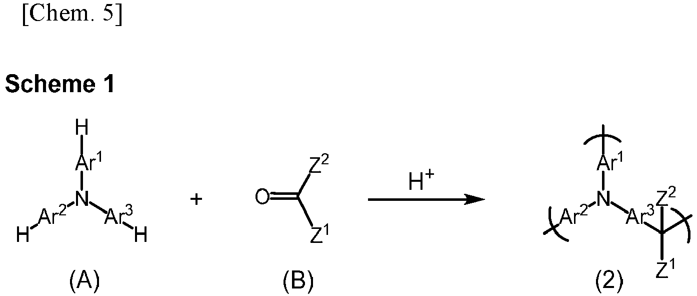

In these formulas, Ar¹ to Ar³ and both Z¹ and Z² are the same as defined above.

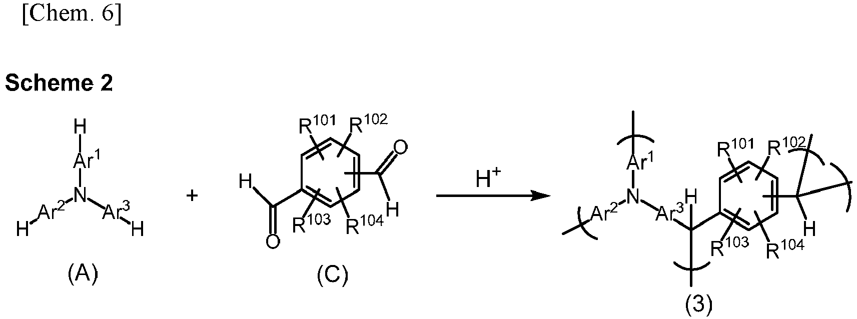

In these formulas, Ar¹ to Ar³ and R¹⁰¹ to R¹⁰⁴ are the same as defined above.

In the condensation polymerization reaction, the aldehyde compound and/or ketone compound may be used in a ratio of from 0.1 to 10 equivalents per equivalent of aryl groups on the triarylamine compound.

The acid catalyst used may be, for example, a mineral acid such as sulfuric acid, phosphoric acid or perchloric acid; an organic sulfonic acid such as p-toluenesulfonic acid or p-toluenesulfonic acid monohydrate; or a carboxylic acid such as formic acid or oxalic acid.

The amount of acid catalyst used, although variously selected according to the type thereof, is generally from 0.001 to 10,000 parts by weight, preferably from 0.01 to 1,000 parts by weight, and more preferably from 0.1 to 100 parts by weight, per 100 parts by weight of the triarylamine.

The condensation reaction may be carried out in the absence of a solvent, although it is generally carried out using a solvent. Any solvent that does not hinder the reaction may be used for this purpose. Illustrative examples include cyclic ethers such as tetrahydrofuran and 1,4-dioxane; amides such as N,N-dimethylformamide (DMF), N,N-dimethylacetamide (DMAc) and N-methyl-2-pyrrolidone (NMP); ketones such as methyl isobutyl ketone and cyclohexanone; halogenated hydrocarbons such as methylene chloride, chloroform, 1,2-dichloroethane and chlorobenzene; and aromatic hydrocarbons such as benzene, toluene and xylene. Cyclic ethers are especially preferred. These solvents may be used singly, or two or more may be used in admixture.

If the acid catalyst used is a liquid compound such as formic acid, in addition to serving as an acid catalyst, it may also fulfill the role of a solvent.

The reaction temperature during condensation is generally between 40°C and 200°C. The reaction time may be variously selected according to the reaction temperature, but is generally from about 30 minutes to about 50 hours.

When acidic groups are introduced onto the highly branched polymer, this may be done by a method that involves first introducing the acidic groups onto aromatic rings of the above triarylamine compound, aldehyde compound and ketone compound serving as the polymer starting materials, then using this to synthesize the highly branched polymer; or by a method that involves treating the highly branched polymer following synthesis with a reagent that is capable of introducing acidic groups onto the aromatic rings. In terms of the ease and simplicity of production, use of the latter approach is preferred.

In the latter approach, the technique used to introduce acidic groups onto the aromatic rings is not particularly limited, and may be suitably selected from among various known methods according to the type of acidic group.

For example, in cases where sulfo groups are introduced, use may be made of a method that involves sulfonation using an excess amount of sulfuric acid.

The average molecular weight of the highly branched polymer is not particularly limited, although the weight-average molecular weight is preferably from 1,000 to 2,000,000, and more preferably from 2,000 to 1,000,000.

Specific examples of the highly branched polymer include, but are not limited to, those having the following formulas.

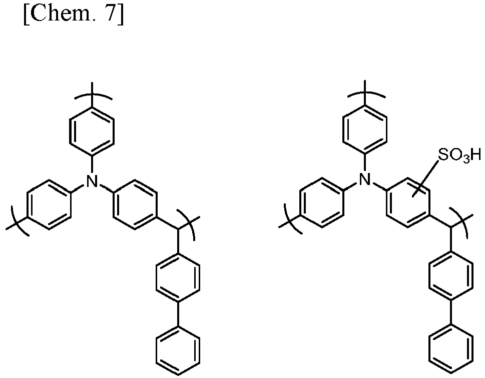

In the present invention, the mixing ratio between the CNTs and the dispersant, expressed as a weight ratio, is preferably from about 1,000:1 to about 1:100.

The concentration of dispersant within the composition is not particularly limited, provided that it is a concentration which enables the CNTs to disperse in the solvent. However, the concentration in the composition is preferably set to from about 0.001 wt% to about 30 wt%, and more preferably to from about 0.002 wt% to about 20 wt%.

The concentration of CNTs in the composition varies according to the coating weight of the target undercoat layer and the required mechanical, electrical and thermal characteristics, and may be any concentration at which at least a portion of the CNTs individually disperse and an undercoat layer can be produced within a practical coating weight range. The concentration of CNTs in the composition is preferably set to from about 0.0001 wt% to about 30 wt%, more preferably from about 0.001 wt% to about 20 wt%, and even more preferably from about 0.001 wt% to about 10 wt%.

The solvent is not particularly limited, so long as it is one that has hitherto been used in preparing conductive compositions. Illustrative examples include water and the following organic solvents: ethers such as tetrahydrofuran (THF), diethyl ether and 1,2-dimethoxyethane (DME); halogenated hydrocarbons such as methylene chloride, chloroform and 1,2-dichloroethane; amides such as N,N-dimethylformamide (DMF), N,N-dimethylacetamide (DMAc) and N-methyl-2-pyrrolidone (NMP); ketones such as acetone, methyl ethyl ketone, methyl isobutyl ketone and cyclohexanone; alcohols such as methanol, ethanol, isopropanol, n-butanol, t-butanol and n-propanol; aliphatic hydrocarbons such as n-heptane, n-hexane and cyclohexane; aromatic hydrocarbons such as benzene, toluene, xylene and ethylbenzene; glycol ethers such as ethylene glycol monoethyl ether, ethylene glycol monobutyl ether and propylene glycol monomethyl ether; and glycols such as ethylene glycol and propylene glycol. One of these solvents may be used alone, or two or more may be used in admixture.

In particular, in terms of being able to increase the proportion of CNTs that are individually dispersed, water, NMP, DMF, THF, methanol, ethanol, n-propanol, isopropanol, n-butanol and t-butanol are preferred. In terms of being able to improve the coating properties, it is preferable to include methanol, ethanol, n-propanol, isopropanol, n-butanol or t-butanol. In terms of being able to lower the costs, it is preferable to include water. These solvents may be used alone or two or more may be used in admixture for the purpose of increasing the proportion of CNTs that are individually dispersed, increasing the coating properties and lowering the costs. When a mixed solvent of water and an alcohol is used, the mixing ratio is not particularly limited, although it is preferable for the weight ratio (water : alcohol) to be from about 1:1 to about 10:1.

A polymer that can serve as a matrix may be added to the inventive composition. Illustrative examples of matrix polymers include the following thermoplastic resins: fluoropolymers such as polyvinylidene fluoride (PVdF), polytetrafluoroethylene, tetrafluoroethylene-hexafluoropropylene copolymers, vinylidene fluoride-hexafluoropropylene copolymers (P(VDF-HFP)) and vinylidene fluoride-chlorotrifluoroethylene copolymers (P(VDF-CTFE)); polyolefin resins such as polyvinylpyrrolidone, ethylene-propylene-diene ternary copolymers, polyethylene (PE), polypropylene (PP), ethylene-vinyl acetate copolymers (EVA) and ethylene-ethyl acrylate copolymers (EEA); polystyrene resins such as polystyrene (PS), high-impact polystyrene (HIPS), acrylonitrile-styrene copolymers (AS), acrylonitrile-butadiene-styrene copolymers (ABS), methyl methacrylate-styrene copolymers (MS) and styrene-butadiene rubbers; polycarbonate resins, vinyl chloride resins, polyamide resins, polyimide resins, (meth)acrylic resins such as sodium polyacrylate and polymethyl methacrylate (PMMA); polyester resins such as polyethylene terephthalate (PET), polybutylene terephthalate, polyethylene naphthalate, polybutylene naphthalate, polylactic acid (PLA), poly-3-hydroxybutyric acid, polycaprolactone, polybutylene succinate and polyethylene succinate/adipate; polyphenylene ether resins, modified polyphenylene ether resins, polyacetal resins, polysulfone resins, polyphenylene sulfide resins, polyvinyl alcohol resins, polyglycolic acids, modified starches, cellulose acetate, carboxymethylcellulose, cellulose triacetate; chitin, chitosan and lignin; the following electrically conductive polymers: polyaniline and emeraldine base (the semi-oxidized form of polyaniline), polythiophene, polypyrrole, polyphenylene vinylene, polyphenylene and polyacetylene; and the following thermoset or photocurable resins: epoxy resins, urethane acrylate, phenolic resins, melamine resins, urea resins and alkyd resins. Because it is desirable to use water as the solvent in the conductive carbon material dispersion of the invention, the matrix polymer is preferably a water-soluble polymer such as sodium polyacrylate, carboxymethylcellulose sodium, water-soluble cellulose ether, sodium alginate, polyvinyl alcohol, polystyrene sulfonic acid or polyethylene glycol. Sodium polyacrylate, carboxymethylcellulose sodium and the like are especially preferred,

The matrix polymer may be acquired as a commercial product. Illustrative examples of such commercial products include sodium polyacrylate (Wako Pure Chemical Industries Co., Ltd.; degree of polymerization, 2,700 to 7,500), carboxymethylcellulose sodium (Wako Pure Chemical Industries, Ltd.), sodium alginate (Kanto Chemical Co., Ltd.; extra pure reagent), the Metolose SH Series (hydroxypropylmethyl cellulose, from Shin-Etsu Chemical Co., Ltd.), the Metolose SE Series (hydroxyethylmethyl cellulose, from Shin-Etsu Chemical Co., Ltd.), JC-25 (a fully saponified polyvinyl alcohol, from Japan Vam & Poval Co., Ltd.), JM-17 (an intermediately saponified polyvinyl alcohol, from Japan Vam & Poval Co., Ltd.), JP-03 (a partially saponified polyvinyl alcohol, from Japan Vam & Poval Co., Ltd.) and polystyrenesulfonic acid (from Aldrich Co.; solids concentration, 18 wt%; aqueous solution).

The matrix polymer content, although not particularly limited, is preferably set to from about 0.0001 wt% to about 99 wt%, and more preferably from about 0.001 wt% to about 90 wt%, of the composition.

The composition of the invention may include a crosslinking agent that gives rise to a crosslinking reaction with the dispersant used, or a crosslinking agent that is self-crosslinking. These crosslinking agents preferably dissolve in the solvent that is used.

Crosslinking agents for oxazoline polymers are not particularly limited, provided that they are compounds having two or more functional groups which react with oxazoline groups, such as carboxyl, hydroxyl, thiol, amino, sulfinic acid and epoxy groups. Compounds having two or more carboxyl groups are preferred. Compounds which have functional groups that, under heating during thin-film formation or in the presence of an acid catalyst, generate the above functional groups and give rise to crosslinking reactions, such as the sodium, potassium, lithium or ammonium salts of carboxylic acids, may also be used as the crosslinking agent.

Examples of compounds which give rise to crosslinking reactions with oxazoline groups include the metal salts of synthetic polymers such as polyacrylic acid and copolymers thereof or of natural polymers such as carboxymethylcellulose or alginic acid which exhibit crosslink reactivity in the presence of an acid catalyst, and ammonium salts of these same synthetic polymers and natural polymers which exhibit crosslink reactivity under heating. Sodium polyacrylate, lithium polyacrylate, ammonium polyacrylate, carboxymethylcellulose sodium, carboxymethylcellulose lithium and carboxymethylcellulose ammonium, all of which exhibit crosslink reactivity in the presence of an acid catalyst or under heating conditions, are especially preferred.

These compounds that give rise to crosslinking reactions with oxazoline groups may be acquired as commercial products. Examples of such commercial products include sodium polyacrylate (Wako Pure Chemical Industries, Ltd.; degree of polymerization, 2,700 to 7,500), carboxymethylcellulose sodium (Wako Pure Chemical Industries, Ltd.), sodium alginate (Kanto Chemical Co., Ltd.; extra pure reagent), Aron A-30 (ammonium polyacrylate, from Toagosei Co., Ltd.; an aqueous solution having a solids concentration of 32 wt%), DN-800H (carboxymethylcellulose ammonium, from Daicel FineChem, Ltd.) and ammonium alginate (Kimica Corporation).

Crosslinking agents for triarylamine-based highly branched polymers are exemplified by melamine crosslinking agents, substituted urea crosslinking agents, and crosslinking agents which are polymers thereof. These crosslinking agents may be used singly, or two or more may be used in admixture. A crosslinking agent having at least two crosslink-forming substituents is preferred. Illustrative examples of such crosslinking agents include compounds such as CYMEL®, methoxymethylated glycoluril, butoxymethylated glycoluril, methylolated glycoluril, methoxymethylated melamine, butoxymethylated melamine, methylolated melamine, methoxymethylated benzoguanamine, butoxymethylated benzoguanamine, methylolated benzoguanamine, methoxymethylated urea, butoxymethylated urea, methylolated urea, methoxymethylated thiourea, methoxymethylated thiourea and methylolated thiourea, as well as condensates of these compounds.

Examples of crosslinking agents that are self-crosslinking include compounds having, on the same molecule, crosslinkable functional groups which react with one another, such as a hydroxyl group with an aldehyde, epoxy, vinyl, isocyanate or alkoxy group; a carboxyl group with an aldehyde, amino, isocyanate or epoxy group; or an amino group with an isocyanate or aldehyde group; and compounds having like crosslinkable functional groups which react with one another, such as hydroxyl groups (dehydration condensation), mercapto groups (disulfide bonding), ester groups (Claisen condensation), silanol groups (dehydration condensation), vinyl groups and acrylic groups.

Specific examples of crosslinking agents that are self-crosslinking include any of the following which exhibit crosslink reactivity in the presence of an acid catalyst: polyfunctional acrylates, tetraalkoxysilanes, and block copolymers of a blocked isocyanate group-containing monomer and a monomer having at least one hydroxyl, carboxyl or amino group.

Such self-crosslinking compounds may be acquired as commercial products. Examples of commercial products include polyfunctional acrylates such as A-9300 (ethoxylated isocyanuric acid triacrylate, from Shin-Nakamura Chemical Co., Ltd.), A-GLY-9E (ethoxylated glycerine triacrylate (EO 9 mol), from Shin-Nakamura Chemical Co., Ltd.) and A-TMMT (pentaerythritol tetraacrylate, from Shin-Nakamura Chemical Co., Ltd.); tetraalkoxysilanes such as tetramethoxysilane (Tokyo Chemical Industry Co., Ltd.) and tetraethoxysilane (Toyoko Kagaku Co., Ltd.); and blocked isocyanate group-containing polymers such as the Elastron Series E-37, H-3, H38, BAP, NEW BAP-15, C-52, F-29, W-11P, MF-9 and MF-25K (DKS Co., Ltd.).

The amount in which these crosslinking agents is added varies according to, for example, the solvent used, the substrate used, the viscosity required and the film shape required, but is generally from 0.001 to 80 wt%, preferably from 0.01 to 50 wt%, and more preferably from 0.05 to 40 wt%, based on the dispersant. These crosslinking agents, although they sometimes give rise to crosslinking reactions due to self-condensation, induce crosslinking reactions with the dispersant. In cases where crosslinkable substituents are present in the dispersant, crosslinking reactions are promoted by these crosslinkable substituents.

In the present invention, the following may be added as catalysts for promoting the crosslinking reaction: acidic compounds such as p-toluenesulfonic acid, trifluoromethanesulfonic acid, pyridinium p-toluenesulfonic acid, salicylic acid, sulfosalicylic acid, citric acid, benzoic acid, hydroxybenzoic acid and naphthalenecarboxylic acid; and/or thermal acid generators such as 2,4,4,6-tetrabromocyclohexadienone, benzoin tosylate, 2-nitrobenzyl tosylate and alkyl esters of organic sulfonic acids.

The amount of catalyst added with respect to the CNT dispersant is preferably from 0.0001 to 20 wt%, more preferably from 0.0005 to 10 wt%, and even more preferably from 0.001 to 3 wt%.

The method of preparing the composition of the invention is not particularly limited, and may involve mixing together in any order the CNTs, the dispersant and the solvent, and also the matrix polymer, crosslinking agent and the like which may be used where necessary, so as to prepare a dispersion.

The mixture is preferably dispersion treated at this time. Such treatment enables the proportion of the CNTs that are dispersed to be further increased. Examples of dispersion treatment include mechanical treatment in the form of wet treatment using, for example, a ball mill, bead mill or jet mill, or in the form of sonication using a bath-type or probe-type sonicator. Wet treatment using a jet mill and sonication are especially preferred.

The dispersion treatment may be carried out for any length of time, although a period of from about 1 minute to about 10 hours is preferred, and a period of from about 5 minutes to about 5 hours is even more preferred. If necessary, heat treatment may be carried out at this time.

When optional ingredients such as a matrix polymer are used, these may be added after preparing the mixture of CNTs, dispersant and solvent.

The solids concentration of the composition in this invention is not particularly limited. However, to form an undercoat layer having the desired coating weight and film thickness, the concentration is preferably 20 wt% or less, more preferably 15 wt% or less, and even more preferably 10 wt% or less.

The lower limit may be any value. However, from a practical standpoint, the lower limit is preferably at least 0.1 wt%, more preferably at least 0.5 wt%, and even more preferably at least 1 wt%.

Here, "solids" refers to the total amount of ingredients other than the solvent which make up the composition.

An undercoat foil can be produced by coating the above-described composition onto at least one side of a current collector, and then drying the applied composition in air or under heating to form an undercoat layer.

The undercoat layer has a thickness which, in order to reduce the internal resistance of the resulting device, is preferably from 1 nm to 10 µm, more preferably from 1 nm to 1 µm, and even more preferably from 1 to 500 nm.

The thickness of the undercoat layer can be determined by, for example, cutting out a test specimen of a suitable size from the undercoat foil, exposing the foil cross-section by such means as tearing the specimen by hand, and using a scanning electron microscope (SEM) or the like to microscopically examine the cross-sectional region where the undercoat layer lies exposed.

The coating weight of the undercoat layer per side of the current collector is not particularly limited, so long as the above-indicated film thickness is satisfied, but is preferably 1,000 mg/m² or less, more preferably 500 mg/m² or less, even more preferably 300 mg/m² or less, and still more preferably 200 mg/m² or less.

To ensure the intended functions of the undercoat layer and to reproducibly obtain batteries having excellent characteristics, the coating weight of the undercoat layer per side of the current collector is set to preferably 1 mg/m² or more, more preferably 5 mg/m² or more, even more preferably 10 mg/m² or more, and still more preferably 15 mg/m² or more.

The coating weight of the undercoat layer is the ratio of the undercoat layer weight (mg) to the undercoat layer surface area (m²). In cases where the undercoat layer is formed into a pattern, this surface area is the surface area of the undercoat layer alone and does not include the surface area of exposed current collector between the undercoat layer that has been formed into a pattern.

The weight of the undercoat layer can be determined by, for example, cutting out a test specimen of a suitable size from the undercoat foil and measuring its weight W0, stripping the undercoat layer from the undercoat foil and measuring the weight W1 after the undercoat layer has been stripped off, and calculating the difference therebetween (W0 - W1). Alternatively, the weight of the undercoat layer can be determined by first measuring the weight W2 of the current collector, subsequently measuring the weight W3 of the undercoat foil on which the undercoat layer has been formed, and calculating the difference therebetween (W3 - W2).

The method used to strip off the undercoat layer may involve, for example, immersing the undercoat layer in a solvent which dissolves the undercoat layer or causes it to swell, and then wiping off the undercoat layer with a cloth or the like.

The coating weight and film thickness can be adjusted by a known method. For example, in cases where the undercoat layer is formed by coating, these properties can be adjusted by varying the solids concentration of the coating liquid for forming the undercoat layer (undercoat layer-forming composition), the number of coating passes or the clearance of the coating liquid delivery opening in the coater.

When one wishes to increase the coating weight or the film thickness, this is done by making the solids concentration higher, increasing the number of coating passes or making the clearance larger. When one wishes to lower the coating weight or the film thickness, this is done by making the solids concentration lower, reducing the number of coating passes or making the clearance smaller.

The current collector may be one that has hitherto been used in energy storage device electrodes. For example, use can be made of copper, aluminum, titanium, stainless steel, nickel, gold, silver and alloys thereof, and of carbon materials, metal oxides and conductive polymers. In cases where the electrode assembly is fabricated by the application of welding such as ultrasonic welding, the use of metal foil made of copper, aluminum, titanium, stainless steel or an alloy thereof is preferred.

The thickness of the current collector is not particularly limited, although a thickness of from 1 to 100 µm is preferred in this invention.

Coating methods for the composition include spin coating, dip coating, flow coating, inkjet coating, casting, spray coating, bar coating, gravure coating, slit coating, roll coating, flexographic printing, transfer printing, brush coating, blade coating, air knife coating and die coating. From the standpoint of work efficiency and other considerations, inkjet coating, casting, dip coating, bar coating, blade coating, roll coating, gravure coating, flexographic printing, spray coating and die coating are preferred.

The temperature when drying under applied heat, although not particularly limited, is preferably from about 50°C to about 200°C, and more preferably from about 80°C to about 150°C.

The energy storage device electrode of the invention can be produced by forming an electrode mixture layer on the undercoat layer.

The energy storage device in this invention is exemplified by various types of energy storage devices, including electrical double-layer capacitors, lithium secondary batteries, lithium-ion secondary batteries, proton polymer batteries, nickel-hydrogen batteries, aluminum solid capacitors, electrolytic capacitors and lead storage batteries. The undercoat foil of the invention is particularly well-suited for use in electrical double-layer capacitors and lithium-ion secondary batteries.

The active material used here may be any of the various types of active materials that have hitherto been used in energy storage device electrodes.

For example, in the case of lithium secondary batteries and lithium-ion secondary batteries, chalcogen compounds capable of adsorbing and releasing lithium ions, lithium ion-containing chalcogen compounds, polyanion compounds, elemental sulfur and sulfur compounds may be used as the positive electrode active material.

Illustrative examples of such chalcogen compounds capable of adsorbing and releasing lithium ions include FeS₂, TiS₂, MoS₂, V₂O₆, V₆O₁₃ and MnO₂.

Illustrative examples of lithium ion-containing chalcogen compounds include LiCoO₂, LiMnO₂, LiMn₂O₄, LiMo₂O₄, LiV₃O₈, LiNiO₂ and LiₓNi_{y}M_{1-y}O₂ (wherein M is one or more metal element selected from cobalt, manganese, titanium, chromium, vanadium, aluminum, tin, lead and zinc; and the conditions 0.05 ≤ x ≤ 1.10 and 0.5 ≤ y ≤ 1.0 are satisfied).

An example of a polyanion compound is LiFePO₄.

Illustrative examples of sulfur compounds include Li₂S and rubeanic acid.

The following may be used as the active material in the negative electrode: alkali metals, alkali metal alloys, at least one elemental substance selected from among Group 4 to 15 elements of the periodic table which intercalate and deintercalate lithium ions, as well as oxides, sulfides and nitrides thereof, and carbon materials which are capable of reversibly intercalating and deintercalating lithium ions.

Illustrative examples of the alkali metals include lithium, sodium and potassium. Illustrative examples of the alkali metal alloys include Li-Al, Li-Mg, Li-Al-Ni, Na-Hg and Na-Zn.

Illustrative examples of the at least one elemental substance selected from among Group 4 to 15 elements of the periodic table which intercalate and deintercalate lithium ions include silicon, tin, aluminum, zinc and arsenic.

Illustrative examples of the oxides include tin silicon oxide (SnSiO₃), lithium bismuth oxide (Li₃BiO₄), lithium zinc oxide (Li₂ZnO₂), lithium titanium oxide (Li₄Ti₅O₁₂) and titanium oxide.

Illustrative examples of the sulfides include lithium iron sulfides (LiₓFeS₂ (0 ≤ x ≤ 3)) and lithium copper sulfides (LiₓCuS (O ≤ x ≤ 3)).

Exemplary nitrides include lithium-containing transition metal nitrides, illustrative examples of which include LiₓM_{y}N (wherein M is cobalt, nickel or copper; 0 ≤ x ≤ 3, and 0 ≤ y ≤ 0.5) and lithium iron nitride (Li₃FeN₄).

Examples of carbon materials which are capable of reversibly intercalating and deintercalating lithium ions include graphite, carbon black, coke, glassy carbon, carbon fibers, carbon nanotubes, and sintered compacts of these.

In the case of electrical double-layer capacitors, a carbonaceous material may be used as the active material.

The carbonaceous material is exemplified by activated carbon, such as activated carbon obtained by carbonizing a phenolic resin and then subjecting the carbonized resin to activation treatment.

The electrode mixture layer may be formed by applying onto the undercoat layer an electrode slurry prepared by combining the above-described active material, the subsequently described binder polymer and, optionally, a solvent, and then drying the applied slurry in air or under heating.

A known material may be suitably selected and used as the binder polymer. Illustrative examples include electrically conductive polymers such as polyvinylidene fluoride (PVdF), polyvinylpyrrolidone, polytetrafluoroethylene, tetrafluoroethylene-hexafluoropropylene copolymers, vinylidene fluoride-hexafluoropropylene copolymers (P(VDF-HFP)), vinylidene fluoride-chlorotrifluoroethylene copolymers (P(VDF-CTFE)), polyvinyl alcohols, polyimides, ethylene-propylene-diene ternary copolymers, styrene-butadiene rubbers, carboxymethylcellulose (CMC), polyacrylic acid (PAA) and polyaniline.

The amount of binder polymer added per 100 parts by weight of the active material is preferably from 0.1 to 20 parts by weight, and more preferably from 1 to 10 parts by weight.

The solvent is exemplified by the solvents mentioned above in connection with the solvent for the composition. The solvent may be suitably selected from among these according to the type of binder, although NMP is preferred in the case of water-insoluble binders such as PVdF, and water is preferred in the case of water-soluble binders such as PAA

The electrode slurry may also contain a conductive material. Illustrative examples of conductive materials include carbon black, ketjen black, acetylene black, carbon whiskers, carbon fibers, natural graphite, synthetic graphite, titanium oxide, ruthenium oxide, aluminum and nickel.

The method of applying the electrode slurry is exemplified by the same techniques as the method of applying the above-described composition.

The temperature when drying the applied electrode slurry under applied heat, although not particularly limited, is preferably from about 50°C to about 400°C, and more preferably from about 80°C to about 150°C.

If necessary, the electrode may be pressed. At this time, the pressing force is preferably 1 kN/cm or more. Any commonly used method may be employed for pressing, although mold pressing or roll pressing is especially preferred. The pressing force, although not particularly limited, is preferably 2 kN/cm or more, and more preferably 3 kN/cm or more. The upper limit in the pressing force is preferably about 40 kN/cm, and more preferably about 30 kN/cm.

The energy storage device according to the invention includes the above-described energy storage device electrode. More specifically, it is constructed of at least a pair of positive and negative electrodes, a separator placed between these electrodes, and an electrolyte, with at least the positive electrode or the negative electrode being the above-described energy storage device electrode.

This energy storage device is characterized by the use, as an electrode therein, of the above-described energy storage device electrode. Hence, the separator, electrolyte and other constituent members of the device that are used may be suitably selected from known materials.

Illustrative examples of the separator include cellulose-based separators and polyolefin-based separators.

The electrolyte may be either a liquid or a solid, and moreover may be either aqueous or non-aqueous, the energy storage device electrode of the invention being capable of exhibiting a performance sufficient for practical purposes even when employed in devices that use a non-aqueous electrolyte.

The non-aqueous electrolyte is exemplified by a non-aqueous electrolyte solution obtained by dissolving an electrolyte salt in a non-aqueous organic solvent.

Examples of the electrolyte salt include lithium salts such as lithium tetrafluoroborate, lithium hexafluorophosphate, lithium perchlorate and lithium trifluoromethanesulfonate; quaternary ammonium salts such as tetramethylammonium hexafluorophosphate, tetraethylammonium hexafluorophosphate, tetrapropylammonium hexafluorophosphate, methyltriethylammonium hexafluorophosphate, tetraethylammonium tetrafluoroborate and tetraethylammonium perchlorate; and lithium imides such as lithium bis(trifluoromethanesulfonyl)imide and lithium bis(fluorosulfonyl)imide.

Examples of the non-aqueous organic solvent include alkylene carbonates such as propylene carbonate, ethylene carbonate and butylene carbonate; dialkyl carbonates such as dimethyl carbonate, methyl ethyl carbonate and diethyl carbonate; nitriles such as acetonitrile; and amides such as dimethylformamide.

The configuration of the energy storage device is not particularly limited. Cells of various known configurations, such as cylindrical cells, flat wound prismatic cells, stacked prismatic cells, coin cells, flat wound laminate cells and stacked laminate cells, may be used.

When used in a coil cell, the above-described energy storage device electrode of the invention may be die-cut in a specific disk shape and used.

For example, a lithium-ion secondary battery may be produced by setting one electrode on a coin cell cap to which a washer and a spacer have been welded, laying an electrolyte solution-impregnated separator of the same shape on top thereof, stacking the energy storage device electrode of the invention on top of the separator with the electrode mixture layer facing down, placing the coin cell case and a gasket thereon and sealing the cell with a coin cell crimper.

In a stacked laminate cell, use may be made of an electrode assembly obtained by welding a metal tab to, in an electrode where an electrode mixture layer has been formed on part or all of the undercoat layer surface, a region of the electrode where the electrode mixture layer is not formed (welding region). In cases where welding is carried out at a region where an undercoat layer is formed and an electrode mixture layer is not formed, the coating weight of the undercoat layer per side of the current collector is set to preferably 0.1 g/m² or less, more preferably 0.09 g/m² or less, and even more preferably 0.05 g/m² or less.

The electrodes making up the electrode assembly may be single plates or a plurality of plates, although a plurality of plates are generally used for both the positive and the negative electrodes.

The plurality of electrode plates used to form the positive electrode are preferably stacked in alternation, one plate at a time, with the plurality of electrode plates that are used to form the negative electrode. It is preferable at this time to place the above-described separator between the positive electrode and the negative electrode.

A metal tab may be welded at a welding region on the outermost electrode plate of the plurality of electrode plates, or a metal tab may be sandwiched and welded between the welding regions on any two adjoining electrode plates of the plurality of electrode plates.

The metal tab material is not particularly limited, provided it is one that is commonly used in energy storage devices. Examples include metals such as nickel, aluminum, titanium and copper; and alloys such as stainless steel, nickel alloys, aluminum alloys, titanium alloys and copper alloys. From the standpoint of welding efficiency, it is preferable for the tab material to include at least one metal selected from aluminum, copper and nickel.

The metal tab has a shape that is preferably in the form of foil, with the thickness being preferably from about 0.05 mm to about 1 mm.

Known methods for welding together metals may be used as the welding method. Examples include TIG welding, spot welding, laser welding and ultrasonic welding. It is preferable to join together the electrode and the metal tab by ultrasonic welding.

Ultrasonic welding methods are exemplified by a technique in which a plurality of electrode plates are placed between an anvil and a horn, the metal tab is placed at the welding region, and welding is carried out collectively by the application of ultrasonic energy; and a technique in which the electrode plates are first welded together, following which the metal tab is welded.

In this invention, with either of these techniques, not only are the metal tab and the electrodes welded together at the welding region, the plurality of electrode plates are ultrasonically welded to one another.

The pressure, frequency, output power, treatment time, etc. during welding are not particularly limited, and may be suitably set while taking into account, for example, the material used, the presence or absence of an undercoat layer, and the coating weight of the undercoat layer.

A laminate cell can be obtained by placing the electrode assembly produced as described above within a laminate pack, injecting the electrolyte solution described above, and subsequently heat sealing.

The inventive composition, as described above, is suitable as a composition for forming an undercoat layer that bonds together the current collector and the active material layer which make up an energy storage device electrode, but can also be used as a conductive carbon material dispersion for forming a conductive coat other than the foregoing undercoat layer.

### EXAMPLES

Examples and Comparative Examples are given below to more fully illustrate the invention, although the invention is not limited by these Examples. The apparatuses used in measurement and the like were as follows.
(1) Probe-type ultrasonicator:
   Apparatus: UIP1000, from Hielscher Ultrasonics GmbH
(2) Wire bar coater:
   Apparatus: PM-9050MC, from SMT Co., Ltd.
(3) Charge/discharge measurement system:
   Apparatus: TOSCAT 3100, from Toyo System Co., Ltd.
(4) Homogenizing disperser:
   Apparatus: T.K. Robomix (Homogenizing Disperser model 2.5 (32 mm dia.)), from Primix Corporation
(5) Thin-film spin-type high-speed mixer:
   Apparatus: Filmix model 40, from Primix Corporation
(6) Planetary centrifugal mixer:
   Apparatus: Thinky Mixer ARE-310, from Thinky
(7) Roll press:
   Apparatus: SA-602, from Takumi Giken
(8) Coin Cell Crimper:
   Apparatus: CR 2032 manual coin cell crimper, from Hohsen Corporation
(9) Viscometer:
   Apparatus: TVE-22L VISCOMETER, from Toki Sangyo Co., Ltd.
(10) Raman Spectrometry:
   Apparatus: ARAMIS, from Horiba, Ltd.

### Measurement Conditions

| | |
|---|---|
| Laser: | 633 nm |
| Grating: | 300 lines/mm (except for NC-7000), 1,200 lines/mm (NC-7000) |
| Measurement range: | 3100 to 150 cm⁻¹ |
| Objective lens: | 10× |
| Detector: | Synapse CCD detector (no sensitivity correction) |
| G: | 1700 to 1450 cm⁻¹ |
| D: | 1450 to 1150 cm⁻¹ |
| Base line: | 1700 to 1150 cm⁻¹ |

### Method for Measuring G/D Ratio

Under the above measurement conditions and using 5 mg of CNTs or carbon black, the peak intensities of the G⁺ band, which is the Raman shift having the largest intensity between 1590 and 1605 cm⁻¹, the G⁻ band, which is the Raman shift having the largest intensity between 1580 and 1565 cm⁻¹, and the D band, which is the Raman shift having the largest intensity between 1330 and 1310 cm⁻¹, were determined, and the (G⁺+G⁻)/D ratio was calculated. The baseline when calculating peak intensities was set to 1700 to 1150 cm⁻¹.

### [1] Preparation of Undercoating Liquid

### [Example 1-1]

The following were mixed together: 5.0 g of the oxazoline polymer-containing aqueous dispersion Epocros WS-300 (Nippon Shokubai Co., Ltd.; solids concentration, 10 wt%; weight-average molecular weight, 1.2×10⁵; amount of oxazoline groups, 7.7 mmol/g) as the dispersant, 37.15 g of pure water and 7.35 g of 2-propanol (guaranteed reagent, from Junsei Chemical Co., Ltd.), in addition to which 0.5 g of the CNT product TC-2010 (multi-walled CNTs from Toda Kogyo Corporation; G/D ratio, 0.997) was mixed therein. The resulting mixture was sonicated for 30 minutes using a probe-type sonicator, thereby preparing a dispersion in which the CNTs were uniformly dispersed. An undercoating liquid (solids concentration, 1.38 wt%) was prepared by mixing therein 1.2 g of the ammonium polyacrylate (PAA-NH₄)-containing aqueous solution Aron A-30 (Toagosei Co, Ltd.; solids concentration, 31.6 wt%), 41.35 g of pure water and 7.44 g of 2-propanol (guaranteed reagent, from Junsei Chemical Co., Ltd.).

### [Example 1-2]

Aside from changing the CNTs to AMC (multi-walled CNTs from Ube Industries, Ltd.; G/D ratio, 0.819), an undercoating liquid was prepared in the same way as in Example 1-1.

### [Example 1-3]

Aside from changing the CNTs to VGCF-X (multi-walled CNTs from Showa Denko KK; G/D ratio, 0.698), an undercoating liquid was prepared in the same way as in Example 1-1.

### [Example 1-4]

Aside from changing the CNTs to NC-7000 (multi-walled CNTs from Nanocyl S.A.; G/D ratio, 0.715), an undercoating liquid was prepared in the same way as in Example 1-1.

### [Comparative Example 1-1]

Aside from changing the CNTs to Baytubes (multi-walled CNTs from Bayer; G/D ratio, 0.612), an undercoating liquid was prepared in the same way as in Example 1-1.

### [Comparative Example 1-2]

Aside from changing the CNTs to Denka Black (carbon black from Denka Co., Ltd.; G/D ratio, 0.672), an undercoating liquid was prepared in the same way as in Example 1-1.

### [Comparative Example 1-3]

Aside from changing the CNTs to EC600JD (ketjen black from Lion Specialty Chemicals Co., Ltd.; G/D ratio, 0.531), an undercoating liquid was prepared in the same way as in Example 1-1.

### [Comparative Example 1-4]

The CNTs were changed to C-100HP (multi-walled CNTs from Arkema; G/D ratio, 2.935), and an undercoating liquid was prepared in the same way as in Example 1-1. However, the CNTs did not disperse, and so the target dispersion could not be obtained.

Examples 1-1 to 1-4 and Comparative Examples 1-1 to 1-4 are summarized in Table 1.

**[Table 1]**

| | | Carbon material | G/D ratio | Viscosity of dispersion (mPa·s, 25°C) |
|---|---|---|---|---|
| Example | 1-1 | multi-walled CNTs | 0.997 | 2.30 |
| | 1-2 | multi-walled CNTs | 0.819 | 2.83 |
| | 1-3 | multi-walled CNTs | 0.698 | 5.06 |
| | 1-4 | multi-walled CNTs | 0.715 | 5.41 |
| Comparative Example | 1-1 | multi-walled CNTs | 0.612 | 3.05 |
| | 1-2 | carbon black | 0.672 | 2.11 |
| | 1-3 | ketjen black | 0.531 | 2.22 |
| | 1-4 | multi-walled CNTs | 2.935 | did not disperse |

### [2] Production of Electrode and Secondary Battery

### [Example 2-1]

An undercoat foil was produced by uniformly spreading the undercoating liquid obtained in Example 1-1 onto aluminum foil (thickness, 15 µm) as the current collector with a wire bar coater (OSP-13; wet film thickness, 13 µm) and then drying for 30 minutes at 150°C to form an undercoat layer.

Twenty pieces were cut from the undercoat foil to a size of 5 × 10 cm each and their weights were measured, following which the weight of the metal foil from which the undercoat layer had been rubbed off using paper impregnated with a 1:1 (weight ratio) mixture of 2-propanol and water was measured. The undercoat layer coating weight calculated from the weight difference before and after rubbing off was 150 mg/m².

The following were mixed together in a homogenizing disperser at 8,000 rpm for 1 minute: 31.84 g of lithium iron phosphate (LFP, from Aleees) as the active material, 13.05 g of an NMP solution of polyvinylidene fluoride (PVdF) (12 wt%; KF Polymer L#1120, from Kuraray Co., Ltd.) as the binder, 1.39 g of Denka Black as the conductive material and 13.72 g of N-methylpyrrolidone (NMP). Next, using a thin-film spin-type high-speed mixer, mixing treatment was carried out for 60 seconds at a peripheral speed of 20 m/s, in addition to which deaeration was carried out for 30 seconds at 2,200 rpm in a planetary centrifugal mixer, thereby producing an electrode slurry (solids concentration, 58 wt %; LFP : PVdF : AB = 91.5:4.5:4 (weight ratio)).

The resulting electrode slurry was uniformly spread (wet film thickness, 100 µm) onto the undercoat foil produced earlier, following which the slurry was dried at 80°C for 30 minutes and then at 120°C for 30 minutes, thereby forming an electrode mixture layer on the undercoat layer. The electrode mixture layer was then pressed with a roll press, producing an electrode.

Four disk-shaped electrodes having a diameter of 10 mm were die-cut from the resulting electrode, the electrode layer weight (the value obtained by subtracting the weight of an uncoated portion of the electrode that was die-cut to a 10 mm diameter from the weight of the die-cut electrode) and the electrode layer thickness (the value obtained by subtracting the thickness of the substrate from the thickness of the die-cut electrode) were measured, following which the electrode disks were vacuum dried at 120°C for 15 hours and then transferred to a glovebox filled with argon.

A stack of six pieces of lithium foil (Honjo Chemical Corporation; thickness, 0.17 mm) that had been die-cut to a diameter of 14 mm was set on a 2032 coin cell (Hohsen Corporation) cap to which a washer and a spacer had been welded, and one piece of separator (Celgard #2400, from Celgard KK) die-cut to a diameter of 16 mm that had been impregnated for at least 24 hours with an electrolyte solution (Kishida Chemical Co., Ltd.; an ethylene carbonate : diethyl carbonate = 1:1 (volume ratio) solution containing 1 mol/L of lithium hexafluorophosphate as the electrolyte) was laid on the foil. An electrode was then placed on top with the active material-coated side facing down. A single drop of electrolyte solution was deposited thereon, after which the coin cell case and gasket were placed on top and sealing was carried out with a coin cell crimper. The cell was then left at rest for 24 hours. In this way, four secondary batteries for testing were produced.

### [Examples 2-2 to 2-4 and Comparative Examples 2-1 to 2-3]

Aside from using the undercoating liquids obtained in, respectively, Examples 1-2 to 1-4 and Comparative Examples 2-1 to 2-3, undercoat foils and secondary batteries for testing were produced in the same way as in Example 2-1.

### [Comparative Example 2-4]

Aside from using plain aluminum foil as the current collector, a secondary battery for testing was produced in the same way as in Example 2-1.

The physical properties of the secondary batteries produced in Examples 2-1 to 2-4 and Comparative Examples 2-1 to 2-4 were evaluated. To evaluate the influence that the undercoat foil at the positive electrode exerts on the battery, the charge-discharge measurement system was used to carry out charge/discharge tests in the following order under the conditions shown in Table 2: battery aging, direct-current resistance measurement, evaluation of cycle characteristics, direct-current resistance measurement. The results obtained are shown in Table 3.

**[Table 2]**

| Step | 1 | 2 | | | | 3 | | | 4 | | | |
|---|---|---|---|---|---|---|---|---|---|---|---|---|
| | Aging | Rate characteristics evaluation (direct-current resistance measurement) | | | | Cycle tests | | | Rate characteristics evaluation (direct-current resistance measurement) | | | |
| Charging conditions (C) | 0.5 | 0.5 | 0.5 | 0.5 | 0.5 | 0.5 | 0.5 | 0.5 | 0.5 | 0.5 | 0.5 | 0.5 |
| Discharging conditions (C) | 0.5 | 0.5 | 3 | 5 | 10 | 0.5 | 5 | 0.5 | 0.5 | 3 | 5 | 10 |
| Number of cycles | 5 | 2 | 2 | 2 | 2 | 2 | 90 | 5 | 2 | 2 | 2 | 2 |

**[Table 3]**

| | | Carbon material | | Coating weight of undercoat layer (mg/m²) | Direct-current resistance (Ω) | |
|---|---|---|---|---|---|---|
| | | Type | G/D ratio | | At time of Step 2 n=4 | At time of Step 4 n=4 |
| Example | 2-1 | multi-walled CNTs | 0.997 | 150 | 24.67 | 22.74 |
| | 2-2 | multi-walled CNTs | 0.819 | 152 | 34.23 | 31.34 |
| | 2-3 | multi-walled CNTs | 0.698 | 116 | 29.32 | 28.24 |
| | 2-4 | multi-walled CNTs | 0.715 | 143 | 42.24 | 43.72 |
| Comparative Example | 2-1 | multi-walled CNTs | 0.612 | 134 | 77.27 | 90.14 |
| | 2-2 | carbon black | 0.672 | 129 | 74.91 | 87.35 |
| | 2-3 | ketjen black | 0.531 | 115 | 196.23 | 225.02 |
| | 2-4 | plain aluminum | | | 34.47 | 50.57 |

| | |
|---|---|
| • Initial and final conditions: | 2 - 4.5 V |
| • Temperature: | room temperature |
| • Discharge voltage: | The discharge voltage was the voltage when the actual discharge capacity under the respective discharging conditions in Steps 2 and 4 was set to 100% and the battery was 10% discharged. |
| • Measurement of direct-current resistance: | In Steps 2 and 4, the direct-current resistance was calculated from the current value and the discharge voltage under each of the discharging conditions, and the average value for four test batteries was determined. |

As shown in Table 3, in the secondary batteries produced in Examples 2-1 to 2-4, because CNTs having G/D ratios in the range specified in this invention are used as the carbon material that forms the undercoat layer, compared with the batteries produced in Comparative Examples 2-1 to 2-4, it is apparent that the direct-current resistance of the battery is low and moreover that a rise in resistance following the cycle test is suppressed.

### REFERENCE SIGNS LIST

- 1: Parallel area
- 2: Tube outer diameter at parallel area
- 3: Constricted area
- 4: Tube outer diameter at constricted area

## Claims

1. An undercoat layer-forming composition for an energy storage device, comprising carbon nanotubes, a carbon nanotube dispersion and a solvent, wherein the carbon nanotubes have a G/D band ratio of from 0.680 to 2.900.

2. The energy storage device undercoat layer-forming composition of claim 1, wherein the G/D band ratio is from 0.800 to 2.900.

3. The energy storage device undercoat layer-forming composition of claim 2, wherein the G/D band ratio is from 0.900 to 2.900.

4. The energy storage device undercoat layer-forming composition of any one of claims 1 to 3 which has a solids content of 20 wt% or less.

5. The energy storage device undercoat layer-forming composition of claim 4, wherein the solids content is 15 wt% or less.

6. The energy storage device undercoat layer-forming composition of claim 5, wherein the solids content is 10 wt% or less.

7. The energy storage device undercoat layer-forming composition of any one of claims 1 to 6, wherein the solvent includes water.

8. The energy storage device undercoat layer-forming composition of any one of claims 1 to 7, wherein the solvent includes an alcohol.

9. The energy storage device undercoat layer-forming composition of any one of claims 1 to 8, wherein the solvent is a mixed solvent of water and an alcohol.

10. The energy storage device undercoat layer-forming composition of any one of claims 1 to 9, wherein the carbon nanotube dispersant includes a vinyl polymer having pendant oxazoline groups or a triarylamine-based highly branched polymer.

11. An undercoat layer obtained from the energy storage device undercoat layer-forming composition of any one of claims 1 to 10.

12. The undercoat layer of claim 11 which has a coating weight of 1,000 mg/m² or less.

13. The undercoat layer of claim 12, wherein the coating weight is 500 mg/m² or less.

14. The undercoat layer of claim 13, wherein the coating weight is 300 mg/m² or less.

15. The undercoat layer of claim 14, wherein the coating weight is 200 mg/m² or less.

16. A composite current collector for an energy storage device electrode, comprising the undercoat layer of any one of claims 11 to 15.

17. An energy storage device electrode comprising the composite current collector of claim 16.

18. An energy storage device comprising the energy storage device electrode of claim 17.

19. The energy storage device of claim 18 which is a lithium-ion secondary battery.

20. A conductive carbon material dispersion comprising carbon nanotubes, a carbon nanotube dispersant and a solvent, wherein the carbon nanotubes have a G/D band ratio of from 0.680 to 2.900.

21. A conductive coat obtained from the conductive carbon material dispersion of claim 20.
